# EUROPEAN PATENT APPLICATION

(11) **EP 4 624 232 A1**
(43) Date of publication of application: **01.10.2025**
(21) Application number: 24167347.4
(22) Date of filing: 28.03.2024
(51) Int. Cl.: B60L 53/16, B60L 53/18, B60L 53/30, B60L 53/31

(54) **CABLE MANAGEMENT ARRANGEMENT, AND ELECTRIC VEHICLE CHARGING STATION**

(71) Applicant: Kempower Oyj, 15700 Lahti (FI)
(72) Inventor: POHJOLA, Mikko, 15700 Lahti (FI); AURONEN, Kimmo, 15700 Lahti (FI); HYLKILÄ, Mika, 15700 Lahti (FI); TUKIA, Antti, 15700 Lahti (FI); NURMINEN, Atte, 15100 Lahti (FI); NEUVONEN, Tommi, 15100 Lahti (FI); ALATALO, Marko, 02150 Espoo (FI)
(74) Representative: Boco IP Oy Ab

(57) **Abstract**

A cable management arrangement (20) for an electric vehicle charging station (30) comprises a charging connector (22), a charging cable (21) coupled to the charging connector (22) at a first end (23) and couplable to a power source (24) at a second end (25) for transmitting electric power from the power source (24) to the electric vehicle (40), and a cable support mechanism (1) for supporting at least the charging connector (22). The cable support mechanism (1) is connected to the charging connector (22) at a connection point (13). The connection point (13) is provided above a line (28) extending from the charging end (26) of the charging connector (22) to the cable end (27) in a charging position of the cable management arrangement (20).

## Description

### FIELD OF THE DISCLOSURE

The present disclosure relates to charging of electric vehicles, and particularly to a cable support mechanism and a cable management arrangement for an electric vehicle charging station and an electric vehicle charging station. The present disclosure further concerns a method for cable management at a charging station.

### BACKGROUND OF THE DISCLOSURE

Electric vehicles require regular charging at charging stations by coupling a plug of a charging cable to a respective socket on the vehicle. As the position of the charging socket on the electric vehicle varies, there charging cable has to have a sufficient length to enable it to be coupled to the electric vehicle. In other words, the charging cable needs to have a sufficient length to reach the charging socket on any given position of the electric vehicle.

However, the length of the charging cable poses its own problems, as it is not desirable to have the charging cable laying on the ground, because this makes it susceptible to damage, for example by being run over by vehicles or people tripping on the cable. Additionally, in winter conditions there is a prominent risk of the cable freezing stuck with ice and or snow surrounding the charging station. Moreover, the plug of the charging cable may get damaged by being dropped on the ground or by being contaminated from dirt from the ground. On the other hand, the charging cables configured for higher charging powers, such as charging cables used for charging buses, trucks and the like, are thick and relatively rigid, and the charging stations are often provided between two charging spaces or lanes, where the space for winding excessive lengths of cable are very limited. Also, in order to keep the high power, such as 200kW or move, DC charging cable somewhat manoeuvrable by a person, the current conductors of the cables are chosen to be relatively small by cross-cut (mm2), this leads to the fact that the cable should be a short as possible to reduce the losses within the cable. The high losses of the cable also usually necessitates cooling of the cables for example via liquid cooling tubes within the cable.

### BRIEF DESCRIPTION OF THE DISCLOSURE

An object of the present disclosure is to provide a new cable support mechanism and a cable management arrangement for an electric vehicle charging station, an electric vehicle charging station, and a method for cable management at a charging station.

The object of the disclosure is achieved by a new cable support mechanism and a cable management arrangement for an electric vehicle charging station, an electric vehicle charging station, and a method for cable management at a charging station, which are characterized by what is stated in the independent claims. Some embodiments of the disclosure are disclosed in the dependent claims.

The disclosure is based on the idea of supporting a charging cable from above with a cable support mechanism with a force and position preventing the charging connector from falling to the ground.

An advantage of cable management arrangement of the disclosure is that it supports the charging connector to an optimal position when connected to an electric vehicle and prevent the charging connector from falling to ground even if it is dropped. This makes handling of the charging connector and charging cable easier and prevents the charging connector and charging cable from being damaged or for instance being frozen to the ground.

### BRIEF DESCRIPTION OF THE DRAWINGS

In the following the disclosure will be described in greater detail by means of preferred embodiments with reference to the accompanying drawings, in which:
Figure 1 illustrates schematically a cable management arrangement and a cable support mechanism in a first use position;
Figure 2 illustrates schematically a cable management arrangement and a cable support mechanism in a second use position;
Figure 3 illustrates schematically a cable management arrangement and a cable support mechanism in a third use position;
Figure 4 illustrates schematically a charging connector in a first position;
Figure 5 illustrates schematically a charging connector in a second position;
Figure 6 illustrates schematically a cable support mechanism; and
Figure 7 illustrates schematically a cable management arrangement.

The figures are for illustrative purposes only and are not shown in scale.

### DETAILED DESCRIPTION OF THE DISCLOSURE

The disclosure relates to charging stations for charging electric vehicle, and more particularly to a charging cable management arrangement for supporting a charging cable and a charging connector attached to the charging cable.

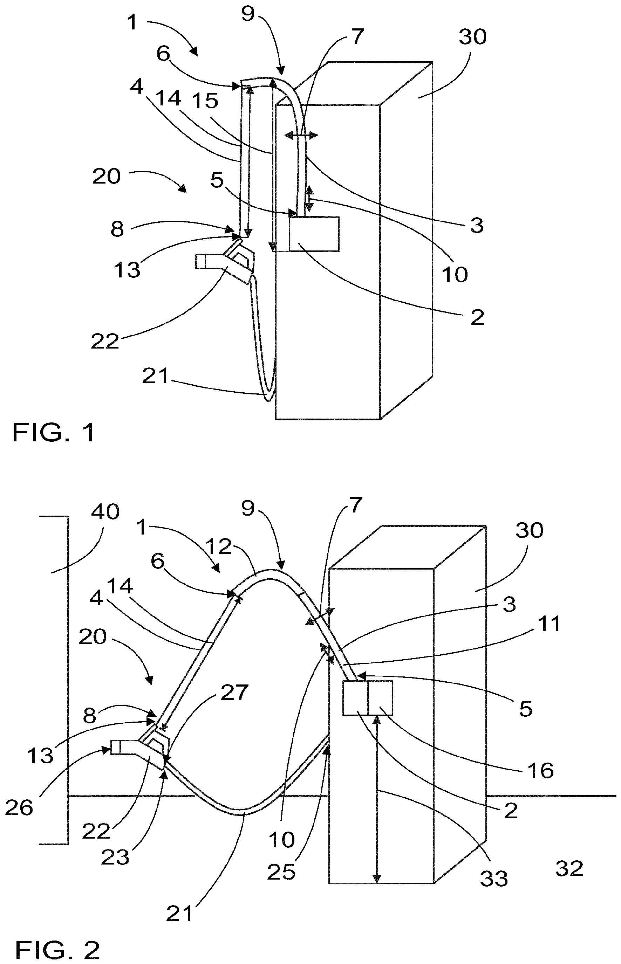

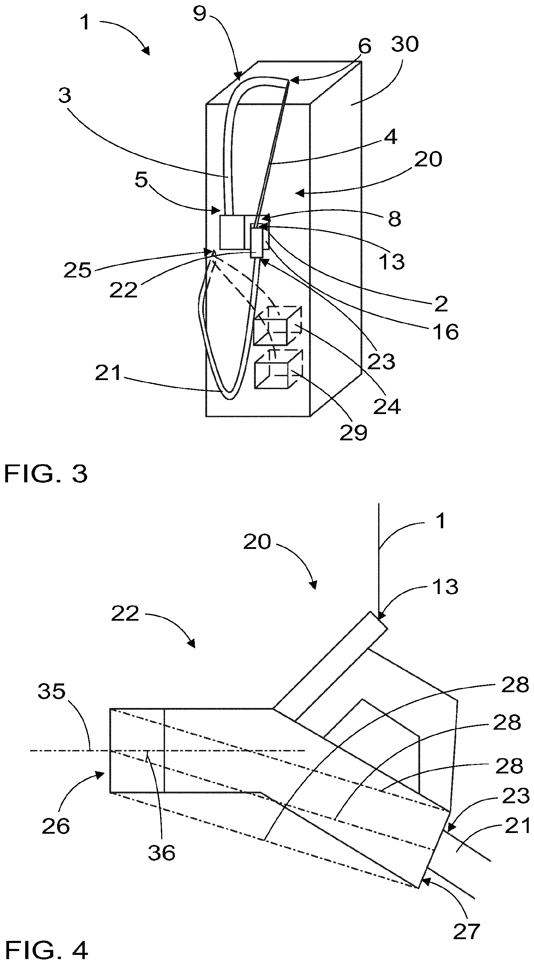

Figure 1 illustrates schematically a cable management arrangement in a first use position, Figure 2 illustrates schematically a cable management arrangement in a second use position, and Figure 3 illustrates schematically a cable management arrangement in a third use position.

Figure 4 illustrates schematically a charging connector a first position, and

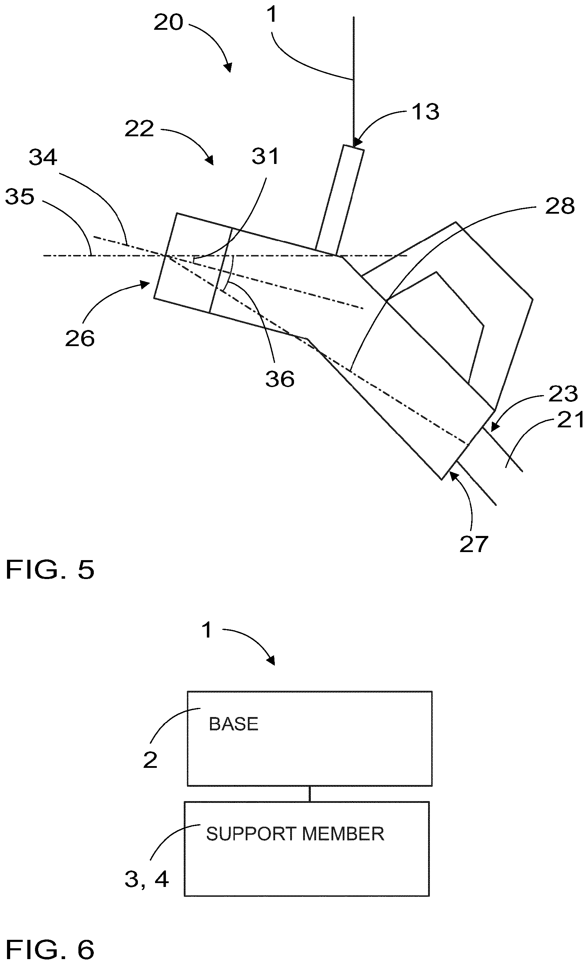

Figure 5 illustrates schematically a charging connector in a second position.

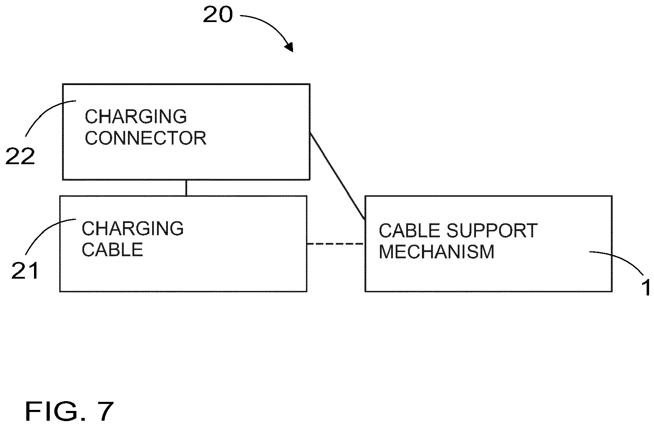

Figure 6 illustrates schematically a cable support mechanism and Figure 7 illustrates schematically a cable management arrangement.

A cable management arrangement 20 for an electric vehicle charging station 30, such as the cable management arrangements 20 of Figures 1, 2, 3, 4, 5, and 7, comprises a charging connector 22 designed to be connected to an electric vehicle for charging electric power to the electric vehicle 40, a charging cable 21, and a cable support mechanism 1 for supporting at least the charging connector 22, when the charging connector 22 is not connected to an electric vehicle 40.

The charging cable 21 is coupled to the charging connector 22 at a first end 23 of the charging cable 21. The charging cable 21 is also couplable to a power source 24 at a second end 25 of the charging cable 21 for transmitting electric power from the power source 24 to the electric vehicle 40. More particularly, electric power is transmitted from the power source 24 to the electric vehicle 40 via the charging connector 22.

The cable support mechanism 1 may, thus, be arranged to support at least the charging connector 22 and, thereby, the first end 23 of the charging cable 21, as the first end 23 of the charging cable 21 is coupled to the charging connector 22, when the charging connector 22 is not connected to an electric vehicle 40.

When the charging connector 22 is connected to an electric vehicle 40, the electric vehicle supports, at least partly, the charging connector 22.

The charging connector 22, on the other hand, has a charging end 26 couplable to the electric vehicle 40 to be charged and a cable end 27 connected, more particularly coupled, to the charging cable 21.

In the cable management arrangement 20, such as the cable management arrangements 20 of Figures 1-5 and 6, the cable support mechanism 1 is, directly or indirectly, connected to the charging connector 22 at a connection point 13. The connection point 13 is provided above a line 28 extending from the charging end 26 of the charging connector 22 to the cable end 27 in a charging position of the cable management arrangement 20, in which charging position the charging connector 22 is coupled to the electric vehicle 40 to be charged. Thereby the cable support mechanism 1 is arranged to support the charging connector 22 from above. This may be beneficial, as it supports and balances the charging connector 22 to an optimal position, namely the position in which it is to be inserted to the electric vehicle 40 to be charged, in the rotational direction about the longitudinal axis of the charging connector 22. This is particularly beneficial in a situation where the heavy and rather inflexible charging cable tends to rotate the charging connector away from the optimal (aligned) rotational angle in relation to the charging socket of the vehicle. The further above from the line 28 the connection point 13 is, the more rotational moment it creates, which helps alignment of the connector 22 to the corresponding socket at the vehicle.

Figure 4 illustrates different embodiments of the line 28 by showing three examples of a position of the line 28. According to an embodiment, the line 28 may extend from the lowest point of the charging end 26 to the lowest point of the cable end 27, which is illustrated by the line 28 shown lowest in Figure 4. According to another embodiment, the line 28 may extend from the middle point of the charging end 26 to the middle point of the cable end 27, which is illustrated by the line 28 shown in the middle in Figure 4. According to a further embodiment, the line 28 may extend from the highest point of the charging end 26 to the highest point of the cable end 27, which is illustrated by the line 28 shown highest in Figure 4. It should also be understood that in different electric vehicles 40, the line 28 may take a horizontal position or a position angled in relation to the horizontal position, which is illustrated schematically in Figure 5. Thus, the charging connector 22 connector may be provided at an angle 31 in relation to the horizontal direction 35, when connected to an electric vehicle 40, which is illustrated schematically by the line 34 in Figure 5. In such cases, the position of the connection point 13 is still defined in relation to the line 28, not for example one of the ends of the line 28.

According to an embodiment, the connection point 13 may be provided between the charging end 26 and the cable end 27, whereby the cable support mechanism 1 is arranged to support the charging connector 22 from above at a point provided between the charging end 26 and the cable end 27. This may be particularly beneficial, when the charging connector 22 may be balanced also in the longitudinal direction of the charging connector 22.

According to an embodiment, the connection point 13 may be supported by and connected to the charging connector 22, such as in Figures 4 and 5. According to other embodiments, the connection point 13 may be supported by and connected to the charging cable 21, for instance at the first end 23 of the charging cable 21, or both the charging cable 21 and the charging connector 22. According to an embodiment, connection point 13 is arranged to a mechanical adapter, which is supportably connected to the charging connector 22 and/or first end 23 of the charging cable 21.

According to an embodiment, the cable support mechanism 1 is arranged to support the charging connector 22 in such a manner that it prevents the charging connector 22 from falling to the ground 32. In other words, the cable support mechanism 1 may be formed to support the charging connector 22 to a height above the ground, when no external force, that is force external to the cable management arrangement 20, is applied to the charging connector 22, for instance no supporting force by the end user or supporting force by an electric vehicle 40 is applied to the charging connector 22. Some embodiments of such cable support mechanisms 1 are disclosed in this disclosure and accompanying claims and drawings.

According to an embodiment, the connection point 13 is selected to balance the charging connector 22 and the charging cable 21 connected to the charging connector 22 in such a manner as to direct the line 28 extending from the charging end 26 of the charging connector 22 to the cable end 27 to extend at an angle 36 in a range of 0 to 45 degrees in relation to a horizontal direction 35, when the charging connector 22 is supported by the charging support mechanism 1 and not affected by further external forces.

According to an embodiment, the charging cable 21 may comprise a charging cable 21, for instance a direct current (DC) charging cable 21, suitable for high-power charging, such as for charging powers of 100 kW or above, preferably 150 kW or above, more preferably for 200 kW or above, and most preferably for 350 kW or above. This kind of charging cables 21 are suitable not only for high-power charging of electric passenger vehicles but also for high-power charging of buses, trucks, industrial machinery and the like.

According to an embodiment, the charging cable (21) has a length of 5 meters or less, preferably 3.5 meters or less, more preferably a length in the range of 2 meters to 3.5 meters, and most preferably a length in the range of 2.5 meters to 3.5 meters. This may be particularly beneficial in connection with embodiments with charging cables 21 suitable for high-power charging since the energy losses per meter may be more substantial than in lower-power charging systems. On the other hand, a length of less than 2 meters may cause the charging cable 21 to be difficult to connect to the electric vehicle 40 to be charged.

According to an embodiment, the cable support mechanism 1 may comprise a support member 3, 4 having an elongated shape comprising a proximal end 5 and a distal end 6 provided at opposite ends of the support member 3, 4. The cable support mechanism 1 may then be connected to the charging connector 22 at the connection point 13 via the distal end 6 of the support member 3, 4.

According to an embodiment, the charging cable 21 may comprise a liquid-cooled charging cable. The cable management arrangement 20 disclosed in this disclosure is particularly beneficial in connection with liquid-cooled charging cables, since this kind of charging cables are typically heavy, not very bendable, and thus not suitable for being wound on a roll and require a supply for the cooling liquid provided in connection with charging cable 21.

According to an aspect, an electric vehicle charging station 30 is provided, wherein the electric vehicle charging station 30 comprises a cable management arrangement 20 according to an embodiment or a combination of embodiments disclosed in this disclosure.

According to an embodiment, the base 2 of the cable support mechanism 1 may be mounted to a side of the electric vehicle charging station 30. According to an embodiment, the base 2 may be mounted at a height 33 preventing the charging connector 22 from falling to the ground 33, when the charging connector 22 is supported by the cable support mechanism 1 and not connected to the base 2, for instance to the receiving part 16 of the base 2, or the electric vehicle 40. Preventing the charging connector 22 from falling to the ground 33 may further be assisted by the structure of the cable support mechanism 1, embodiments of which are disclosed in this disclosure.

According to an embodiment, the electric vehicle charging station 30 may comprise a power source 24, as shown schematically in Figure 3, and the charging cable 21 is connected to the power source 24 at a second end 25 of the charging cable 21. According to another embodiment, the power source 24 may be provided outside the electric vehicle charging station 30, for instance in a separate enclosure (not shown). According to some embodiments, the power source 24 may comprise an AC-DC converter or a DC-DC converter.

According to an embodiment, the power source 24 may be a direct current power source. According to an embodiment, the power source 24 may be a power source configured to provide charging powers of 100 kW or above, preferably 150 kW or above, more preferably 200 kW or above, and most preferably for 350 kW or above.

According to an embodiment, the charging cable 21 comprises a liquid-cooled charging cable, and the electric vehicle charging station 30 comprises a heat exchanger 29 for cooling liquid for cooling the charging cable 21, which heat exchanger 29 is connected to the charging cable 21. According to an embodiment, the cooling liquid may comprise water, water glycol mixture or transformer oil. According to another embodiment, the cooling liquid may comprise other cooling liquid suitable for cooling the charging cable 21. According to a further aspect, a cable support mechanism 1 for an electric vehicle charging station 30, such as the cable support mechanism 1 of Figures 1, 2, and 3, may comprise a base 2, and a support member 3, 4 having an elongated shape comprising a proximal end 5 and a distal end 8 provided at opposite ends of the support member 3, 4.

The base 2 may comprise the base of the cable support mechanism 1. According to an embodiment, the base 2 may be configured to attach the cable support mechanism 1 to the electric vehicle charging station 30.

The support member 3, 4 comprising an elongated shape refers to the support member 3, 4 having a length that is greater than the transverse dimensions of the support member 3, 4. This length of the support member 3, 4 extends from the proximal end 5 of the support member 3, 4 to the distal end 8 of the support member 3, 4. According to an embodiment, the support member 3, 4 may comprise one uniform structure. According to another embodiment, the support member 3, 4 may comprise two or more parts, which may comprise different structures, materials and/or other characteristics.

In the cable support mechanism 1, such as the cable support mechanism of Figures 1, 2, and 3, the support member 3, 4 may be fixedly mounted to and supported by the base 2 at the proximal end 5 of support member 3, 4. In other words, the proximal end 5 of the support member 3, 4 is fixed to the base 2 of the cable support mechanism 1.

The support member 3, 4 may be arranged to extend upwards from the base 2 at the proximal end 5 in a first use position of the cable support mechanism 1, in which first use position no external force is applied to the cable support mechanism 1. In other words, when no external force is applied to the cable support mechanism 1, at least the part of the support member 3, 4 provided at the proximal end of the support member 3, 4 is arranged to extend upwards from the base 2. An example of such a first use position can be seen in Figure 1.

In this disclosure, different use positions of the cable support mechanism 1 and the cable management arrangement 20 are named as first use position, second use position and so on. In the context of this disclosure, the first use position of the cable support mechanism 1 corresponds to the first use position of the cable management arrangement 20, and so on, and these positions may also be generally called first use position, second use position and so on in this disclosure, thus covering the corresponding use position of the cable support mechanism 1, cable management arrangement 20, or both.

In the cable support mechanism 1, such as the cable support mechanism of Figures 1, 2, and 3, the support member 3, 4 may be reversibly flexible in a transverse direction 7 of the support member 3, 4. More particularly, the support member 3, 4 is reversibly flexible in such a manner that at least a part of the support member 3, 4 bends in a transverse direction 7 in relation to the upwards direction of the first use position in a second use position of the cable support mechanism 1, wherein in the second use position of the cable support mechanism 1 an external force directed away from the base 2 is applied to a distal end 8 of the support member 3, 4, and returns to the position extending upwards from the base 2 in the first use position, when the external force is no longer applied to the cable support mechanism 1. The transverse direction 7 of the support member 3, 4 refers to a direction transverse in relation to the length of the support member 3, 4. Support member 3, 4, or at least a part of it, bending refers to a deformation of the support member 3, 4 in such a manner that the mutual position of the proximal end 5 fixed to the base 2 and the distal end 8 of the support member 3, 4 changes. An embodiment of the second use position of the cable support mechanism 1 is shown in Figure 2. This kind of a reversibly flexible and bendable structure of the support member 3, 4, especially combined with the support member 3, 4 supporting the charging connector 22 from above, applies forces pulling the charging connector 22 upwards and towards the base 2. Firstly, this is beneficial helping to support the charging connector 22 in a substantially upwards direction regardless of the direction of the bending. This helps in coupling of the charging connector 22 to the electric vehicle 40, more particularly to the corresponding socket at the electric vehicle 40, even regardless of the exact mutual position of the electric vehicle charging station 30 and the electric vehicle 40. Secondly, the other force vector is, thus, directed towards the base 2, which helps to return the charging connector 22 back to the receiving part 16, which may also be called a charging station holder.

According to an embodiment, the distal end 8 of the support member 3, 4 may be designed to be connected to a charging connector 22 of a charging cable 21 to support the charging cable 21. In such embodiments, the second use position of the cable support mechanism 1, wherein an external force directed away from the base 2 is applied to the distal end 8 of the support member 3, 4, may comprise for instance a situation, where an end user, such as an electric vehicle driver, pulls a charging connector 22 and, thus, the distal end 8 of the support member 3, 4 connected to the charging connector 22 to connect the charging connector 22 to an electric vehicle 40 to charge the electric vehicle 40. In such embodiment and situation, the end user pulling the distal end 8 of the support member 3, 4 via the charging connector 22 causes the external force directed away from the base 2. Thereby, the external force applied to the distal end 8 of the support member 3, 4 in the second use position of the cable support mechanism 1 may comprise a force manually applied to the distal end 8 by an end user pulling the distal end 8 away from the base 2, for instance towards an electric vehicle 40 to be charged.

Depending on the embodiment, the distal end 8 may be directly or indirectly connected to the charging connector 22. The distal end 8 of the support member 3, 4 being indirectly connected to the charging connector 22 refers to the distal end 8 of the support member 3, 4 being connected to the charging connector 22 via a mechanical adapter or similar structure enabling the support member 3, 4 to support the charging connector 22 as described in this disclosure.

According to an embodiment, the support member 3, 4 comprises a self-supporting structure. In other words, the support member 3, 4 may keep its position extending upwards from the base 2 at the proximal end 5 in the first use position of the cable support mechanism 1 without other external support for the support member 3, 4 besides the base 2. In other words, the support member 3, 4 may be designed to extend upwards from the base 2 at the proximal end 5, while only supported by the base 2 at the proximal end 5 fixed to the base 2, when no other external force is applied to the support member 3, 4.

According to an embodiment, in the first use position of the cable support mechanism 1, such as in the first use position illustrated schematically in Figure 1, the distal end 8 of the support member 3, 4 is provided at a level which is lower than the highest point of the support member 3, 4 in the first use position. In other words, the support member 3, 4 may be designed to extend upwards from the base 2 at the proximal end 5 and then downwards from the highest point of the support member 3, 4 in such a manner that the distal end 8 is provided lower than the highest point, when no external force is applied to the cable support mechanism 1. This may enable supporting the charging cable from above, while at the same time enabling easy access for the end user to reach the distal end 6 of the support member 3, 4 to bring the distal end 8 of the support member 3, 4 and the possible charging connector 22 connected to it.

As described above, according to an embodiment, the support member 3, 4 may comprise two or more parts, which may comprise different structures, materials and/or other characteristics. According to an embodiment, the support member 3, 4 comprises a first support member 3 having an elongated shape and comprising the proximal end 5 of the support member 3, 4. According to an embodiment, the first support member 3 comprises at least a part of the self-supporting structure of the support member 3, 4.

According to an embodiment, the support member 3, 4 may further comprise a second support member 4 having an elongated shape. The second support member may be fixedly mounted to and supported by a distal end 6 of the first support member 3. According to an embodiment, the second support member 4 may extend downwards from the distal end 6 of the first support member 3 in the first use position of the cable support mechanism 1, such as in the first use position illustrated in Figure 1. According to an embodiment, a distal end 8 of the second support member 4, which is the distal end 8 of the support member 3, 4, may configured to be connected to a charging connector 22 of a charging cable 21 for charging an electric vehicle 40.

According to an embodiment, the second support member 4 may comprise at least one of a cord, cable, load strap or the like. According to an embodiment, the second support member 4 may comprise another type of an elongated structure. Preferably, the second support member 4 comprises a durable and flexible structure and material.

According to an embodiment, a length 14 of the second support member 4 is adjusted to the height 15 of the first support member 3 in the first use position of the cable support mechanism 1 in such a manner that the distal end 8 of the second support member 4 extends at a height of the base 2 or within a distance from the height of the base 2 equal to 20 percent or less of the height of the first support member 3 in the first use position of the cable support mechanism 1. The length 14 of the second support member 4 refers to the distance between the end of the second support member 4 connected to the first support member 3 and the distal end 8 of the second support member 4 measured along the second support member 4. The height 15 of the first support member 3 refers to the vertical distance between the proximal end 5 of the first support member 3 and the highest point of the first support member 3 in the first use position of the cable support mechanism 1, where no external force is applied to the cable support mechanism 1, such as the first use position illustrated in Figure 1.

According to an embodiment, the self-supporting structure of the first support member 3 may have a spring force resisting the bending of the first support member 3 in the transverse direction 7. According to an embodiment, the spring force resisting the bending of the first support member 3 may be great enough to support the weight of the charging connector 22 and at least party the charging cable 21 to prevent the charging connector 22 from falling to the ground 32. More particularly, the spring force resisting the bending of the first support member 3 may be great enough to support the weight of the charging connector 22 and at least partly the charging cable 21 to prevent the charging connector 22 from falling to the ground 32, when no external force is applied to the cable support mechanism 1 and/or to the charging connector 22, for instance when the end user releases the charging connector 22 without connecting it to either the electric vehicle 40 or the cable support mechanism 1.

The spring force of the first support member 3 resisting the bending of the first support member 3 and, thus, supporting the weight of the charging connector 22 and at least partly the distal end of the charging cable 21 refers to the first support member 3 being able to also support first end 23 of the charging cable 21 enough to prevent the charging connector 22 from falling to the ground 32. The spring force does not have to support the entire charging cable 21, as the other end of the charging cable 21 is supported by other structures, such as the electric vehicle charging station 30, and, in some embodiments, it may be acceptable that a middle part of the charging cable 21, namely a portion of the charging cable provided between the first end 23 and the second end 25 of the charging cable 21.

According to an embodiment, the spring force resisting the bending of the first support member 3 may, on the other hand, be small enough to enable pulling of the charging connector 22 to be connected to the electric vehicle 40 to be charged by a human force, such as pulling by the end user. According to an embodiment, the first support member 3 may comprise at least one coil spring. In other words, the spring force may be arranged to be provided by the coil spring. According to a further embodiment, the first support member 3 may comprise another type of a spring or a structure designed provide the spring force. According to such an embodiment, the spring force may be provided for instance by forming the first support member 3 or a part of it of a reversibly flexible material providing the spring force. Thus, according to an embodiment, at least a part of the first support member 3 forms at least a part of the reversibly flexible part of the support member 3, 4.

According to an embodiment, the second support member 4 may have no spring force resisting bending of the second support member 4. Alternatively, the spring force of the second support member 4 may be so small that it does not affect bending of the second support member 4.

According to an embodiment, the first support member 3 may comprise a curved portion 9 at the distal end 6 of the first support member 3, namely at the end of the first support member 3 connected to the second support member 4. According to another embodiment, where the support member 3, 4 comprises a uniform structure, the curved portion 9 may be provided at a point between the proximal end 5 and the distal end 8 of the support member 3, 4, for instance close to a middle of the support member 3, 4. The curved portion 9, whether provided at the distal end 6 of the first support member 3 or provided in another manner in the support member 3, 4, may bend downwards at least in the first use position of the cable support mechanism 1.

According to an embodiment, the first support member 3 may be formed of two adjacent coil springs in the longitudinal direction 10 of the first support member 3, wherein a first coil spring 11 is mounted to the base 2 and the second coil spring 12 forms the curved portion 9. In other words, the first coil spring 11 may be provided to extend from the proximal end 5 of the first support member 3 and the second coil spring 12 may be provided to extend from the distal end 6 of the first support member 3. According to an embodiment, the first coil spring 11 and the second coil spring 12 may be connected to each other.

According to an embodiment, the base 2 may further comprise a receiving part 16 for the charging connector 22. In other words, a part of the base 2 may be formed, or designed, to receive the charging connector 22 or an end thereof. Preferably, the receiving part 16 is formed to keep the charging connector 22 in its place in the base 2 for storing the charging connector 22, for instance when the charging connector 22 is not used for charging an electric vehicle 40. For this purpose, the receiving part 16 may be formed to conform to the shape of the charging connector 22 at least partly. The receiving part 16 may, thus be formed to removably keep the charging connector 22 in its place in the base 2. The receiving part 16 being formed to removably keep the charging connector 22 in its place refers to the receiving part 16 enables the charging connector 22 to rest in the receiving part 16 and to be removed from the receiving part 16, for example by the end user for connecting the charging connector 22 to the electric vehicle 40 to be charged.

According to an embodiment, a length 14 of the second support member 4 is adjusted to the height 15 of the first support member 3 in the first use position of the cable support mechanism 1 in such a manner that the distal end 8 of the second support member 4 extends at a height of the receiving part 16 or within a distance from the height of the receiving part 16 equal to 20 percent or less of the height of the first support member 3 in the first use position of the cable support mechanism 1.

According to an aspect, a cable management arrangement 20 for an electric vehicle charging station 30 may be provided. According to an embodiment, the cable management arrangement 20 may comprise a cable support mechanism 1 according to an embodiment or a combination of embodiments disclosed in this disclosure.

According to an embodiment, the cable management arrangement 20 may further comprise a charging connector 22, and a charging cable 21 coupled to the charging connector 22. According to an embodiment, the charging cable 21 may be coupled to the charging connector 22 at a first end 23 of the charging cable 21. According to an embodiment, the charging cable 21 may further be couplable to a power source 24 at a second end 25 of the charging cable 21.

According to an embodiment, the distal end 8 of the second support member 4 of the cable support mechanism 1 may be connected to the charging connector 22 of the charging cable 21 for charging an electric vehicle 40. According to an aspect, an electric vehicle charging station 30 may be provided, wherein the electric vehicle charging station 30 comprises at least one of a cable support mechanism 1 or a cable management arrangement 20 according to an embodiment or a combination of embodiments disclosed in this disclosure.

According to an embodiment, in electric vehicle charging station 30, the base 2 of the cable support mechanism 1 is mounted to a side of the electric vehicle charging station 30.

Previously, different technical aspects (for instance cable support mechanism and cable management arrangement) have been described, which can be advantageously combined with each other.

It is obvious for a person skilled in the art that, as the technology advances, the concept of this disclosure may be implemented in various ways. The disclosed solution and its embodiments are not limited to the examples described in this description but may vary within the scope of the claims.

## Claims

1. A cable management arrangement for an electric vehicle charging station, wherein the cable management arrangement comprises
a charging connector designed to be connected to an electric vehicle for charging electric power to the electric vehicle,
a charging cable coupled to the charging connector at a first end of the charging cable and couplable to a power source at a second end of the charging cable for transmitting the electric power from the power source to the electric vehicle via the charging connector, and
a cable support mechanism for supporting at least the charging connector and, thus, the first end of the charging cable, when the charging connector is not connected to an electric vehicle,
wherein the charging connector has a charging end couplable to the electric vehicle to be charged and a cable end connected to the charging cable, and
wherein the cable support mechanism is connected to the charging connector at a connection point, which connection point is provided above a line extending from the charging end of the charging connector to the cable end in a charging position of the cable management arrangement, in which charging position the charging connector is coupled to the electric vehicle to be charged, whereby the cable support mechanism is arranged to support the charging connector from above.

2. A cable management arrangement according to claim 1, wherein connection point is provided between the charging end and the cable end, whereby the cable support mechanism is arranged to support the charging connector from above at a point provided between the charging end and the cable end.

3. A cable management arrangement according to claim 1 or 2, wherein the cable support mechanism is arrangement to support the charging connector in such a manner that it prevents the charging connector from falling to the ground.

4. A cable management arrangement according to any one of claims 1-3, wherein the cable support mechanism comprises a support member having an elongated shape comprising a proximal end and a distal end provided at opposite ends of the support member,
wherein the cable support mechanism is connected to the charging connector at the connection point via the distal end of the support member.

5. A cable management arrangement according to any one of claims 1-4, wherein the cable support mechanism comprises a base designed to be mounted to a side of an electric vehicle charging station for mounting the cable support mechanism to the electric vehicle charging station.

6. A cable management arrangement according to claim 5, wherein the support member is fixedly mounted to and supported by the base at the proximal end of support member.

7. A cable management arrangement according to claim 5 or 6, wherein the support member is arranged to extend upwards from the base at the proximal end of the support member in a first use position of the cable management arrangement, in which first use position no external force is applied to the cable support mechanism, and
wherein the distal end of the support member is arranged to be supported by the support member in the first use position of the cable management arrangement at such a height that the cable support mechanism prevents the charging connector from falling to the ground.

8. A cable management arrangement according to any one of claims 5-7, wherein the support member is a self-supporting structure, which keeps its position extending upwards from the base in the first use position of the cable management arrangement without other external support besides the base.

9. A cable management arrangement according to claim 7 or 8, wherein the support member is reversibly flexible in a transverse direction of the support member in such a manner that at least a part of the support member bends in a transverse direction in relation to the upwards direction of the first use position in a second use position of the cable support mechanism, wherein in the second use position of the cable support mechanism an external force directed away from the base is applied to a distal end of the support member, and returns to the position extending upwards from the base in the first use position, when the external force is no longer applied to the cable support mechanism.

10. A cable management arrangement according to any one of claims 5-9, wherein the base further comprises a receiving part for the charging connector, which receiving part is designed to receive the charging connector, when the charging connector is not used for charging an electric vehicle, and to removably keep the charging connector in its place in the base.

11. A cable management arrangement according to any one of claims 1 - 10, wherein connection point is selected to balance the charging connector and the charging cable connected to it in such a manner as to direct the line extending from the charging end of the charging connector to the cable end to extend at an angle in a range of 0 to 45 degrees in relation to a horizontal direction, when the charging connector is supported by the charging support mechanism and not affected by further external forces.

12. A cable management arrangement according to any one of claims 1-11, wherein the charging cable comprises a liquid-cooled charging cable.

13. A cable management arrangement according to any one of claims 1 - 12, wherein the charging cable comprises a direct current charging cable formed for charging powers of at least 200 kW.

14. A cable management arrangement according to any one of claims 1-13, wherein the charging cable has a length of 5 meters or less, preferably 3,5 meters or less, and most preferably a length in the range of 2.5 meters to 3.5 meters.

15. An electric vehicle charging station, wherein the electric vehicle charging station comprises a cable management arrangement of any one of claims 1 - 14.

16. An electric vehicle charging station according to claim 15, wherein
the base of the cable support mechanism is mounted to a side of the electric vehicle charging station.

17. An electric vehicle charging station according to claim 16, wherein the base is mounted at a height preventing the charging connector from falling to the ground, when the charging connector is supported by the cable support mechanism and not connected to the base or the electric vehicle.

18. An electric vehicle charging station according to any one of claims 15 - 17, wherein
the electric vehicle charging station comprises a power source and the charging cable is connected to the power source at a second end of the charging cable.

19. An electric vehicle charging station according to claim 18, wherein the power source is a direct current power source.

20. An electric vehicle charging station according to any one of claims 15 - 19, wherein
the charging cable comprises a liquid-cooled charging cable, and wherein the electric vehicle charging station comprises a heat exchanger for cooling liquid for cooling the charging cable, which heat exchanger is connected to the charging cable.
